# FASCICULE DE BREVET EUROPEEN

(11) **EP 2 887 142 B1**
(45) Date de publication et mention de la délivrance du brevet: **08.05.2019**
(21) Numéro de dépôt: 14195665.6
(22) Date de dépôt: 01.12.2014
(51) Int. Cl.: G03B 21/60, G02B 27/01, G02B 5/18

(54) **Systeme de visualisation comprenant un ecran comportant un reseau de motifs diffractifs**
Anzeigesystem, das einen Bildschirm umfasst, der wiederum ein Netz von diffraktiven Motiven umfasst
Display system including a screen having a grid of diffractive patterns

(30) Priorité: 11.12.2013 FR 1302895
(43) Date de publication de la demande: 24.06.2015
(73) Titulaire: THALES, 92400 Courbevoie (FR)
(72) Inventeur: Pelletier, Sébastien, 33187 LE HAILLAN Cedex (FR); Gueguen, Aude, 33187 LE HAILLAN Cedex (FR); Grossetete, Matthieu, 33187 LE HAILLAN Cedex (FR); Bardon, Jean-Luc, 33187 LE HAILLAN Cedex (FR); Laluque, Laurent, 33187 LE HAILLAN Cedex (FR)
(74) Mandataire: Bréda, Jean-Marc

(56) Documents cités:
- EP-A1- 2 469 324

## Description

Le domaine de l'invention est celui des dispositifs de visualisation projetant une image sur un écran semi-transparent. Ces dispositifs permettent d'afficher une image face à l'utilisateur en superposition sur le paysage extérieur. Un des domaines d'utilisation possible est la présentation d'informations dans les véhicules, plus précisément dans les cockpits d'aéronef et en particulier dans les cockpits d'aéronefs qui disposent de surfaces vitrées importantes.

Un exemple d'un système d'affichage tête haute est divulgué dans EP2469324A.

Ces systèmes de visualisation permettent de conserver l'attention de l'utilisateur sur l'environnement qui l'entoure, tout en lui donnant accès instantanément à des informations additionnelles. Dans le cas de la conduite d'un véhicule, avoir des informations affichées dans le champ visuel de l'environnement extérieur évite à l'utilisateur d'avoir à chercher ces informations sur des écrans situés classiquement sur sa planche de bord ou son tableau de bord.

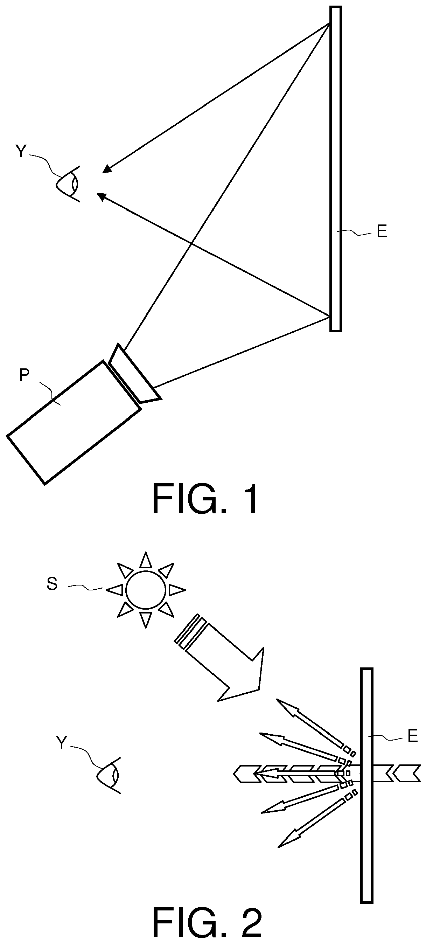

Il existe différentes solutions techniques permettant de projeter une image sur un écran semi-transparent. La plus courante est illustrée en figure 1. Elle consiste à projeter l'image issue d'un projecteur P émettant dans le visible sur la surface d'un film diffusant transparent E. Le diffuseur diffuse l'image projetée vers l'oeil Y de l'observateur, tout en restant relativement transparent et permettant ainsi la vision de l'extérieur. Le compromis entre transmission et diffusion n'est pas simple à trouver. Des films diffusants sont dédiés à la projection publicitaire sur les parois vitrées des magasins. Cependant, la technique est surtout utilisée de nuit, c'est-à-dire sous faible luminosité ambiante. De jour, cette technique donne des résultats médiocres. En effet, comme on le voit en figure 2, le film E diffuse la lumière solaire S dans toutes les directions (flèches droites rayées de la figure 2). La transmission de la lumière est représentée par une succession de chevrons sur cette figure. Le film apparaît alors laiteux, la transparence est limitée, le rendement en réflexion et la luminosité de l'image projetée restent faibles et peu satisfaisants.

Aussi, la demanderesse a proposé dans la demande FR 2 986 624 intitulée « Projecteur optique à écran de projection semi-transparent » un écran de visualisation comportant une pluralité de motifs diffusants la lumière régulièrement répartis sur une surface transparente, ces motifs pouvant comporter un traitement réfléchissant. Par rapport aux systèmes précédents, l'écran semi-transparent de ce projecteur possède à la fois une grande transparence et donne une bonne luminosité de l'image projetée, tout en ayant une diffraction limitée.

Cependant, les rayons lumineux issus du projecteur et diffusés par l'écran ont tous une incidence connue. De la même façon, l'éclairement solaire ne peut venir que de certaines directions, certaines parties du cockpit constituant un masque naturel. Or, l'écran précédent est isotrope. Il ne prend pas en compte de façon fine les variations d'incidence des rayons lumineux issus du projecteur de façon à optimiser les rendements de diffusion vers l'oeil de l'observateur.

L'écran selon l'invention ne présente pas ces inconvénients. Il comporte des motifs orientés de façon à prendre en compte les positions du projecteur d'images et de l'utilisateur de façon à assurer une diffusion optimale de la lumière. De plus, la diffusion par l'éclairement solaire est minimisée. Plus précisément, l'invention a pour objet un système de visualisation comportant un projecteur d'images et un écran de visualisation associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs régulièrement répartis, caractérisé en ce que, le projecteur d'images éclairant l'écran sous une pluralité d'incidences déterminées par la position et la taille de l'écran de visualisation, lesdites incidences centrées sur une incidence moyenne, les motifs comportent une structure diffractive de façon à diffracter les rayons lumineux ayant au moins l'incidence moyenne dans une ou des directions correspondant audit emplacement déterminé de l'observateur, les dimensions des motifs étant de l'ordre de quelques dizaines de microns à quelques centaines de microns, lesdits motifs occupant 20% de la surface de l'écran.

Avantageusement, les paramètres de diffraction de chaque motif sont adaptés à l'incidence de la lumière issue du projecteur d'image et qui éclaire ledit motif.

L'invention sera mieux comprise et d'autres avantages apparaîtront à la lecture de la description qui va suivre donnée à titre non limitatif et grâce aux figures annexées parmi lesquelles :
La figure 1 déjà commentée représente le synoptique d'un système de visualisation à projecteur d'images selon l'art antérieur ;
La figure 2 déjà commentée représente la diffusion solaire sur un écran de visualisation selon l'art antérieur ;
La figure 3 représente un système de visualisation comportant un écran de visualisation selon l'invention ;
La figure 4 représente une vue en coupe d'un mode de réalisation d'un écran de visualisation selon l'invention.

Le système de visualisation selon l'invention comporte un projecteur d'images et un écran de visualisation associé spécifique. L'image émise par le projecteur d'images se forme sur ou au voisinage immédiat de la surface de l'écran de visualisation. Cet écran de visualisation comporte deux faces transparentes et sensiblement parallèles. Ces faces ne sont pas nécessairement planes et l'écran selon l'invention peut parfaitement s'intégrer à un pare-brise courbe, par exemple.

Dans un grand nombre d'applications et en particulier, lorsque le système de visualisation est intégré dans un cockpit ou dans une cabine de pilotage, comme il a été dit, la position du projecteur par rapport à l'écran est parfaitement déterminée et les yeux de l'utilisateur occupent un emplacement déterminé que l'on appelle dans certaines applications « boîte à oeil ». De la même façon, la lumière solaire ne peut venir que de certaines directions, le cockpit introduisant des masques naturels.

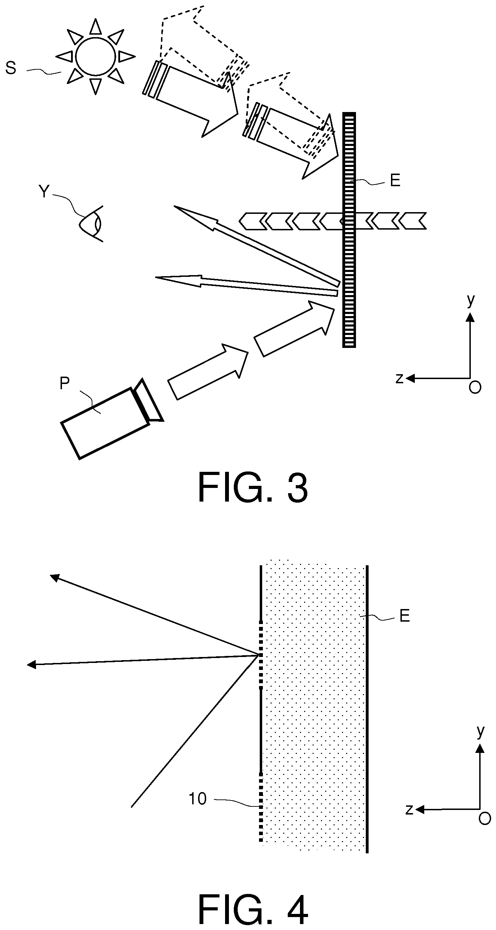

L'écran selon l'invention exploite cette propriété. En disposant une pluralité de motifs diffractant la lumière régulièrement répartis sur une de ses faces transparentes, on peut les agencer de façon que, le projecteur d'images éclairant l'écran sous une pluralité d'incidences déterminées par la position et la taille de l'écran de visualisation, lesdites incidences centrées sur une incidence moyenne, les motifs diffractants sont agencés de façon à diffracter les rayons lumineux ayant au moins l'incidence moyenne dans une ou des directions correspondant audit emplacement déterminé de l'observateur. Plus précisément, les motifs diffractent la lumière de façon très différente en fonction de l'incidence. Cette propriété est illustrée sur la figure 3. Les rayons solaires ne sont pas diffusés vers l'oeil de l'observateur alors que ceux issus du projecteur le sont. A titre d'exemple, les rayons solaires peuvent être rétroréfléchis par les motifs comme indiqué sur la figure 3.

On peut différentier les écrans de visualisation en deux grands types. Dans le premier type, tous les motifs sont strictement identiques. Dans le second type, chaque motif est fonction de l'incidence moyenne sur le motif des rayons lumineux issus du projecteur.

Généralement, les dimensions des motifs sont de l'ordre de quelques dizaines de microns à quelques centaines de microns. Le pourcentage de surface de l'écran occupée par les motifs détermine le taux de transmission de l'écran de visualisation. Ainsi, si les motifs occupent 20% de la surface de l'écran, le taux de transmission hors pertes par réflexions vitreuses ne peut dépasser 80%. La réalisation de tels motifs ne pose pas de problèmes de réalisation particuliers. En effet, ces motifs ont essentiellement un rôle photométrique et ne nécessite pas la précision des systèmes optiques destinés à l'imagerie.

A titres d'exemple non limitatif, la figure 4 représente un mode de réalisation d'un écran de visualisation selon l'invention. Cette figure est référencée dans le même repère (O, x, y, z) et représente une vue en coupe de l'écran de visualisation. La flèche brisée sur cette vue en coupe indique le passage d'un rayon lumineux issu du projecteur à l'intérieur du motif, la pointe de la flèche est dirigée vers l'observateur.

Sur cette figure 4, chaque motif 10 est une facette plane diffractante, située sur une des faces transparentes de l'écran. Les caractéristiques de la texture diffractante recouvrant la facette sont ajustées de manière à assurer un éclairement quasi uniforme dans la boîte à oeil et un éclairement quasi nul en dehors.

Chaque facette comporte un ensemble de microfacettes identiques. Deux paramètres importants définissent ces microfacettes. Ce sont :
- Les dimensions de chaque microfacette et plus précisément, le pas de chaque microfacette qui vont définir les directions de diffraction en fonction d'une direction d'incidence donnée et ;
- la forme de chaque microfacette qui définit le rendement de diffraction dans une direction donnée. Généralement, les microfacettes sont des surfaces planes inclinées.

Il est possible d'optimiser ces deux paramètres de façon à obtenir des rendements très importants dans les directions correspondants à celles de la boîte à oeil. Chaque microfacette peut être recouverte d'un traitement réfléchissant pour améliorer les rendements. On peut également adapter les facettes aux spectres d'émission du projecteur et dédier des facettes à des bandes spectrales particulières.

## Revendications

1. Système de visualisation comportant un projecteur d'images (P) et un écran de visualisation (E) associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs (10) régulièrement répartis, le projecteur d'images éclairant l'écran sous une pluralité d'incidences déterminées par la position et la taille de l'écran de visualisation, lesdites incidences centrées sur une incidence moyenne, **caractérisé en ce que**, les motifs comportent une structure diffractive de façon à diffracter les rayons lumineux ayant au moins l'incidence moyenne dans une ou des directions correspondant audit emplacement déterminé de l'observateur, les dimensions des motifs étant de l'ordre de quelques dizaines de microns à quelques centaines de microns, lesdits motifs occupant 20% de la surface de l'écran.

2. Système de visualisation selon la revendication 1, **caractérisé en ce que** les paramètres de diffraction de chaque motif (10) sont adaptés à l'incidence de la lumière issue du projecteur d'image (P) et qui éclaire ledit motif.

## Patentansprüche

1. Anzeigesystem, das einen Bildprojektor (P) und einen zugehörigen Anzeigebildschirm (E) umfasst, wobei das Anzeigesystem zur Verwendung durch einen sich an einem bestimmten Ort befindlichen Betrachter ausgelegt ist, wobei der Anzeigebildschirm zwei transparente und im Wesentlichen parallele Flächen aufweist, wobei der Anzeigebildschirm auf mindestens einer seiner transparenten Flächen eine Vielzahl von Mustern (10) aufweist, die regelmäßig verteilt sind, wobei der Bildprojektor den Bildschirm aus einer Vielzahl von Einfallsrichtungen beleuchtet, die durch die Position und Größe des Anzeigebildschirms bestimmt werden, wobei die Einfallsrichtungen auf einen mittleren Einfall zentriert sind, **dadurch gekennzeichnet, dass** die Muster eine diffraktive Struktur aufweisen, um die Lichtstrahlen, die mindestens den durchschnittlichen Einfall aufweisen, in eine oder mehrere Richtungen, die dem bestimmten Ort des Beobachters entsprechen, zu beugen, wobei die Abmessungen der Muster in der Größenordnung von einigen zehn Mikrometern bis einigen hundert Mikrometern liegen, wobei die Muster 20% der Oberfläche des Bildschirms einnehmen.

2. Anzeigesystem nach Anspruch 1, **dadurch gekennzeichnet, dass** die Beugungsparameter jedes Musters (10) an den Einfall des Lichts angepasst sind, das aus dem Bildprojektor (P) stammt und das Muster beleuchtet.

## Claims

1. Display system comprising an image projector (P) and an associated display screen (E), wherein said display system is designed to be used by an observer situated at a given location, said display screen comprising two transparent and substantially parallel faces, said display screen comprising, on at least one of its transparent faces, a plurality of regularly distributed patterns (10), the image projector illuminating the screen under a plurality of incidence determined by the position and the size of the display screen, said incidence being centred on a mean incidence, **characterised in that** the patterns comprise a diffractive structure in order to diffract the light rays having at least the mean incidence in one or more directions corresponding to the given location of the observer, the dimensions of the patterns being in the order of a few tens of microns to a few hundreds of microns, said patterns occupying 20% of the surface of the screen.

2. Display system according to claim 1, **characterised in that** the diffraction parameters of each pattern (10) are adapted to the incidence of the light coming from the image projector (P) and which illuminates the said pattern.
